(19) Europäisches Patentamt
European Patent Office
Office européen des brevets

(11) **EP 4 613 635 A1**

(12) **EUROPEAN PATENT APPLICATION**

(43) Date of publication:
**10.09.2025 Bulletin 2025/37**

(21) Application number: **24020068.3**

(22) Date of filing: **04.03.2024**

(51) International Patent Classification (IPC):
**B64C 1/06** (2006.01)  **B64C 1/18** (2006.01)
**B64D 27/24** (2024.01)

(52) Cooperative Patent Classification (CPC):
**B64C 1/061; B64C 1/18; B64D 27/34;
B64D 27/357; B64C 1/062**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Maeve Aerospace B.V.
2629 JD Delft (NL)**

(72) Inventor: **The designation of the inventor has not
yet been filed**

(74) Representative: **Blum, Heike
c/o AKLaw
Perchtinger Straße 6
81379 München (DE)**

(54) **FUSELAGE CRASH ZONES**

(57) The invention relates to a transport aircraft with an electric propulsion system and a fuselage section including a fuselage tube section (22) for hosting payload and battery packs comprising
• a **cabin floor** separating an upper compartment from a lower compartment,
• a plurality of **floor beams** extending in transverse direction for supporting the floor, separated in longitudinal direction from each other,
• **fuselage frames** (221) supporting the cabin floor and / or the floor beams and / or the fuselage skin separated in longitudinal direction from each other,
characterised in that
the lower compartment is comprising a plurality of **battery compartments** separated in longitudinal direction from each other, each configured to host at least one battery pack, wherein the battery packs are suspended from the floor beam and / or floor.

Advantages: Based on an aircraft 10 to carry passengers, with an electric or hybrid propulsion system. The fuselage is sized in a conventional single-aisle or widebody configuration. At least one fuselage tube section host in the lower compartment a plurality of battery compartments to hold battery packs for the electric propulsion unit. Since the battery packs are suspended from the floor beams the fuselage can sustain deformation from crashes with reducing the risk of fatal battery damages.

Fig. 2a

**Description**

The invention relates to a fuselage section for a transport aircraft with an electric or hybrid electric propulsion system.

The aircraft propulsion system architecture is using an integrated hybrid engine technology. In combination with the required battery capacity and sustainable aviation fuel it shall significantly reduce emissions by operational efficiency and open the opportunity to balance mission range with zero $CO_2$ and zero emission operation.

The term aircraft refers to a motor-driven fixed-wing aircraft. However, the term aircraft also includes, for example, rotorcraft (rotor aircraft, helicopters) and powered gliders. Aircraft and their flight propulsion systems can be differentiated regarding the applicable construction and certification regulations. Regulation CS-23 issued by EASA is applicable to light fixed-wing powered aeroplanes. It applies to: 'normal, utility or aerobatic' category aeroplanes with a maximum of 9 seats (excluding pilot(s)) and a maximum take-off mass of 5,670 kg and to 'commuter' category aeroplanes with a maximum of 19 seats (excluding pilot(s)) and a maximum take-off mass of 8,618 kg. The CS-25 is also a design specification issued by EASA for the type certification of large aircraft, in particular large turbine-powered aircraft. Multi-engine aircraft to be certified according to the CS-25 are considered here.

Regional transport aircraft are predominantly characterised by a design with straight, unswept wings and a cruising speed of 500 to 700 km/h. Today, turboprop propulsion is the main application for regional transport aircraft in civil aviation.

Turboprop engines is characterised by relatively low specific fuel consumption, which is why it is primarily used in transport and short-haul aircraft. Another civilian application is in smaller business jets such as the TBM-850. In the military, turboprops are mainly used in tactical transport aircraft. Aircraft with turboprops are limited to flying speeds of up to 80 per cent of the speed of sound (0.8 Mach), which corresponds to about 870 km/h at an altitude of 8,000 m in normal conditions. In the speed range, of 0,4 to 0,75 Mach turboprops operate more economically than jet turbine engines.

To generate thrust, a large amount of air is moved by the propeller, but this is only slightly accelerated compared to turbojet engines. In pure turbojet engines, on the other hand, much smaller quantities of the propulsion medium are accelerated in higher degree.

Depending on airspeed, altitude and load, the angle of attack (pitch) of the propeller blades is changed so that both the turbine and the propeller operate in the optimum speed range.

The turbomachinery is usually optimised for the dominant flight phase, in medium and long-range missions this is usually the cruise phase, as this also accounts for the highest share of energy consumption over the mission.

Therefore, especially for regional aircraft with propeller, but also for other multi-engine aircraft with jet-engines, there are different thrust requirements over the mission, which can be designed and operated more efficiently by hybridising the thermal engines with an electric engine.

Added to this is the challenge of reducing $CO_2$, NOx and noise emissions. In fact, decarbonization is a major challenge for aviation. The aviation sector emits more than 900 million tons of carbon dioxide ($CO_2$) per year. Assuming industry growth of 3 to 4 percent per annum (p.a.) and efficiency improvement of 2 percent p.a., emissions would more than double by 2050. At the same time, the Air Transport Action Group (ATAG) committed to 50 percent $CO_2$ emission reduction (compared to 2005) and the European Union (EU) set with the Green Deal a target to become carbon neutral. Beyond $CO_2$, aircraft impact the climate through emissions of nitrogen oxides ($NO_x$), soot, and water vapour, which create contrails and cirrus clouds. Therefore, the "full" contribution to global warming is significantly higher than just $CO_2$ emissions alone.

(Hydrogen-powered aviation, A fact-based study of hydrogen technology, economics, and climate impact by 2050, Publication date 22. June 2020. Available https://www.clean-hydrogen.europa.eu/media/publications/hydrogen-powered-aviation_en [downloaded: 04.03.2022]).

The question that currently arises is whether electric or hydrogen-powered aircraft will be used in the future to meet the aforementioned requirements? Possibly. Airbus, Rolls Royce, GE and Siemens believe that they can solve the problem of reducing $CO_2$, $NO_X$ and noise emissions by replacing a turbofan engine with an electric engine, following the automotive industry on the path of electrically, or at least hybrid, powered vehicles. ("Flightpath 2050 Europe's Vision for Aviation," [Online]. Available: https://op.europa.eu/s/vUu1 [downloaded 04.03.2022]).

GE International is working on a corresponding hybridised turbofan engine for twin-engine commercial aircraft, as the disclosure of EP 3 421 760 A1 shows. An electric motor is coupled to the high-pressure shaft of one turbofan engine and to the low-pressure shaft of the other turbofan engine. An electrical energy storage is provided to feed the electric motors, so that the electric motors can provide additional drive power to the coupled turbofan in certain operating states. A similar solution is proposed by SNECMA in publication WO 2009/153471 A2 and by Deutsche Aircraft in publication WO 2022/002319A.

The major impact of another proposal of using hydrogen fuel for aircrafts is the increased energy storage volume and fuel tank system weight. This leads to a significant design impact in both variants, $H_2$ combustions and $H_2$-fuel cells for propulsion electrification. This is why full hydrogen energy application over mission is not compatible with today's aircraft configurations.

The dual fuels propulsion architecture as it is known for example from aircraft engine manufacturer General Electric (WO 2012/045028 A1 and US 2013/0192246A1) is based on the combination of classical aircraft fuel, e.g., available Jet A-1 compatible fossil and synthetic fuels or full sustainable aviation fuels (SAF) in combination with hydrogen.

The key challenge is that zero $CO_2$ emission flight is currently not payload and volume efficient possible with hydrogen due to the impact from hydrogen storage system on volume and weight over a certain flight mission. This is valid by using hydrogen for combustion and even more by using hydrogen as energy source for fuel cells and propulsion electrification.

A crucial component for electric (i.e. electrically driven/electrically propelled) aircraft, including eCTOL, is an appropriate energy storage system (ESS). The energy storage system may be realized in the form of a battery system of chargeable batteries, which may be structured into a plurality of individual battery cells. Individual battery cells may be combined to form one or more battery modules of an aircraft battery system used as an energy storage system. Examples of a battery type suitable for being used in the framework of the present invention are Lithium (Li)- ion batteries.

In addition to the optimization of the propulsion system the crashworthiness of a transport aircraft is a topic that has gained significant attention over the last decades. The increase of the worldwide commercial air traffic demands improved crashworthiness to sustain damages in cases of landings with exceeding high vertical g-loads. In addition, a substantial challenge is the today's trend in the aircraft industry to increasingly replace metallic materials by composite materials. Ductile, energy absorbing material behaviour is replaced by high elastic but brittle material characteristics with comparably low energy absorption. Therefore, alternative crash concepts using discrete crash absorbers have to be considered in the design process of new aircraft structures made of composite materials. The crash design process will have an influence on the overall design of a transport aircraft fuselage structure, and hence should be considered in an early phase of the design process. With the upcoming design of transport aircraft having an electric propulsion system powered by a large quantity of batteries the specific requirements of battery safety need to be considered in the assessment and conception of crashworthiness.

Crashworthiness is the ability of an aircraft structure and its internal systems to protect occupants from injury in an event of crash. Specifically, it means that the integrity of the passenger cabin should be maintained, that the accelerations the passengers are subjected to should be survivable in case of a crash, and that fires should be prevented. No specific rule addresses means of compliance for the impact response characteristics for what could be considered survivable crash conditions. (Guida et. al. 2018) however,

- Typical impact velocities are 20 - 30 ft/s.
- There exist several criteria for assessing the risk of injury due to high accelerations. One on them is the Eiband diagram (Waimer 2013).

The function of the energy storage system is to provide an electrically driven aircraft with sufficient accessible energy for safe flight and landing.

It is therefore the objective of the invention to provide to an optimised solution of an aircraft fuselage architecture for a commercial transport airplane which on one hand features a conventional fuselage cross section and on the other hand host a significant volume of battery packs without compromising the crashworthiness of the aircraft.

The solution to the objective is provided by the features of the independent claims 1.

1. Purpose of Invention

The invention relates to transport aircraft with any degree of electrification on its propulsion and/or energy storage. The invention ensures a crash-safe fuselage structural framework on which batteries are stored partially or fully within the aircraft fuselage. The invention employs distinct crash zones to ensure the maximum impact energy is dissipated through the primary structure minimizing the impact on the battery modules.

2. Application Parameter

The crash-safe structural framework and implementation maximizes the survivability of fuselage mounted battery modules after a crash event for aircraft which employ batteries for the partial or complete energy source for propulsive or system energy, which can be partially or fully stored in the main fuselage body of the aircraft. The invention applies and can be used for all types of aircraft, airplanes, rotorcraft, and unmanned/uncrewed aircraft in which one or more battery modules are housed and integrated into an identifiable fuselage structure.

The invention complies with all additional aviation safety standards applicable to structures and systems which share zonal installation with the battery modules, while minimising the structural mass penalty when compared with conventional fuselage structures.

3. Main Benefits

Summary of main benefits:

- The crash-safe structural framework ensures multi-purpose fuselage primary structural elements for load distribution while providing safe battery module integration with minimum structural mass penalties.
- The crash-safe structural framework maximizes the energy dissipated during a crash event through three distinct 'crash zones':

    ◦ the primary crash zone (lower bilge) maximizes the cross-section height and implements a primary structure crash zone to absorb initial impact energy;
    ◦ the secondary crash zone (battery safe zone) decouples the direct impact from the battery modules, their mounting structure and the initial deformation of the primary crash zone;
    ◦ the third crash zone (passenger safety zone) ensures the structural integrity of the primary cabin structure to maximize the passenger survivability while still undergoing plastic deformation.

- The crash-safe structural framework ensures that the battery modules are not penetrated by structural members after a crash event thus minimizing the risk of thermal runaway, fire, explosion, and off-gassing induced by the crash event.
- The crash-safe structural framework ensures that the battery module housings are not the primary load-carrying structure after plastic deformation following a crash event.

The solution to the objective is provided by the features of the independent claim 1.
An essential component of the invention is the crash framework structural layout, which ensures that most of the impact energy during a crash event is dissipated through the plastic deformation of the primary structural members, while significantly reducing the loads and energy experience by the battery modules.
The optimised crash-safe fuselage structural layout is supporting the following targets for the future aircraft and their operations:

- Safe mounting of battery modules on the fuselage primary structure at a minimum structural mass penalty
- Maximum dissipation of impact energy during a crash event away from the battery modules
- Minimizing the risk of thermal runaway of battery modules after a crash event
- Minimizing the deformation of battery module structure/housing after a crash event
- Minimizing the risk of battery modules becoming loose after a crash event

The crash-safe fuselage structural layout is operating in the following modes:

- Initial impact
- Phase I: deformation of primary crash zone;

    ◦ The lower crash framework absorbs the initial impact energy to reduce the *g* loads experience by the rest of the airframe including the battery modules.
    ◦ Energy-absorbing struts balance the plastic deformation of the lower shell.
    ◦ The height in the primary crash zone and the stiffness distribution maintains the deformation mostly below the crash cross beam.
    ◦ There is no contact between the battery modules and the crash frame due to crash framework deflecting in between frames bays.

- Phase II: deformation of primary and secondary crash zone;

    ◦ The deflection of the crash cross beam occurs in between battery modules in the z-direction.
    ◦ The lateral z-struts attached between the floor cross beam and the crash cross beam support the stability of the cabin structure, while the central z-strut absorbs most of the impact energy; additional energy is absorbed by the further deflection of the lower crash framework.

- Phase III: deflection of the floor cross beam;

    ◦ The residual kinetic energy of the passenger cabin is absorbed by the floor cross beam deflection, ensuring it stays within safe limits.

○ Battery modules move slightly upwards and in a lateral direction due to the mounting bracket being attached to the floor cross beam.
○ Additional deformation of the crash framework absorbs any remaining energy while ensuring that the battery module housing is not the main load carrying interface for the remainder of loads in the z-direction.

A typical fuselage section consists of the pressurised shell (often made of skin, frames, and stringers), a passenger floor (including struts), and a cargo floor.

Further useful embodiments are disclosed in the dependent claims 2 to 18.

The architecture described in this invention can also be sized and integrated as a retrofit variant for existing aircraft. The invention is explained in the following based on preferred embodiments with reference to the accompanying drawings, in which:

Fig. 1a   shows a front view of a twin-engine commuter aircraft featuring an electric propulsion system driving two propeller,

Fig. 1b   shows a side view of a schematic illustration of the aircraft according to Fig. 1a,

Fig. 1c   shows a top view of a schematic illustration of the aircraft according to Fig. 1a,

Fig. 2a   shows a cross section of the aircraft fuselage according to the cut indication in Fig. 1b featuring representative geometric dimensions of the fuselage section,

Fig. 2b   shows a longitudinal cut, of the aircraft fuselage according to the cut indication in Fig. 1c featuring representative geometric dimensions of the fuselage section,

Fig. 3a   shows a cross section according to Fig. 2a with a deformed cargo floor structure and

Fig. 3b   shows a longitudinal cut according to Fig. 2b with a deformed cargo floor structure.

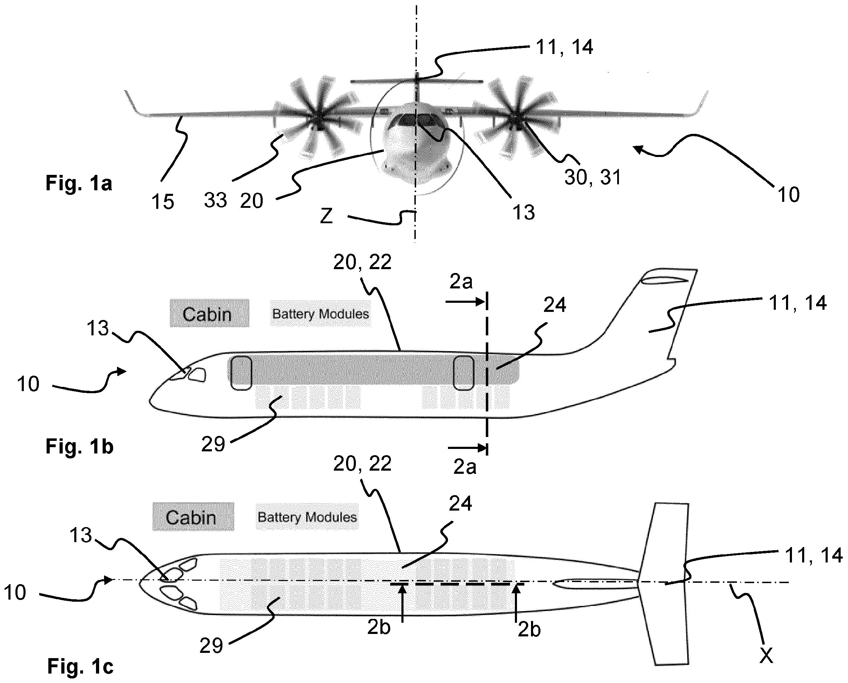

A typical representation of a twin engine regional aircraft 10 is shown in the embodiment according to **Fig. 1a.** It is a representation of next generation of a regional aircraft, the Maeve M80. The airplane 10 is designed as a conventional high-wing aircraft 10 with a T-tail empennage 11.

As an aircraft 10 with an electric propulsion system 30 the aircraft 10 features two hybrid-electric engines 31 attached in nacelles 32 under each wing. Each engine is driving a multi bladed propeller 33. The electric propulsion system 30, involve the use of electric motors powered by batteries to drive the aircraft's propellers.

As further illustrated in **Fig. 1b** and **Fig. 1c** the fuselage 20, is an assembly of cylindrical and conical tube sections 21, featuring a pressurized cabin 12, a cockpit 13 in the front nose of the fuselage 20 and the passenger compartment hosting seat capacity for 80 passengers. Further aft, the fuselage 20 tapers conically and carries the T-tail 14. In the conventional shoulder deck configuration, the wings 15 are attached to the fuselage's 20 upper side, tangent to the fuselage's upper side.

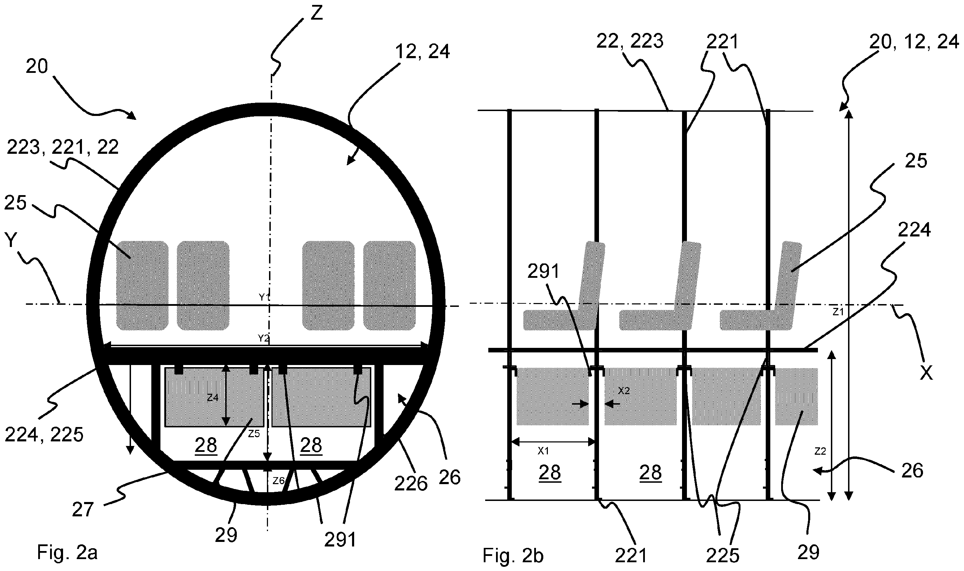

As illustrated in the cross section and longitudinal section of **Fig. 2a** and **Fig. 2b** respectively. the fuselage 20 comprises a pressurised shell, with a cabin floor 224 separating an upper compartment 24 from a lower compartment 26, and a cargo floor 27. Typically, the function of these components is as follows:

a) **The pressurized shell and tube section 21:** The fuselage 20 is typically a hollow structure of tube sections 21 with a strong outer shell that is designed to withstand the stresses of flight, including aerodynamic forces and pressurization.

b) **Cabin Floor 23:** The upper compartment 24 of the fuselage 20 is where the passenger cabin 12 is located. The cabin floor 224 separates this area from the lower compartment 26, which may house various systems, cargo, energy storage or other components.

c) **Upper Compartment 24:** This is where passengers and crew members are seated. The design of this area includes passenger seats 25 and considerations for comfort, safety, and accessibility.

d) **Lower Compartment 26:** Below the cabin floor 23, the lower compartment 26 may contain various systems, equipment, or additional cargo space. As for an aircraft 10 with an electric propulsion system 30 the lower compartment 26 is hosting a plurality of battery compartments 28 holding battery packs 29 to feed the engines 31 and aircraft systems with electric energy. This area is critical for housing further components like avionics, hydraulics, or other systems necessary for the aircraft's operation.

e) **Cargo Floor 27:** The cargo floor 27 is a specific part of the lower compartment 26 that is designed to carry cargo and other system components. In some aircraft, this space may be used for baggage in commercial planes or for freight in cargo planes.

The fuselage's design is crucial for maintaining the structural integrity of the aircraft 10 and ensuring the safety and comfort of passengers and crew. Additionally, the fuselage plays a role in the aerodynamics of the aircraft 10 and affects its overall performance.

In this context the crashworthiness of the aircraft 10 and its fuselage 20 is the ability of an aircraft structure and its internal systems to protect occupants from injury in an event of crash. Specifically, it means that the integrity of the passenger cabin 12 should be maintained, that the accelerations the passengers are subjected to should be survivable in case of a crash, and that fires should be prevented.

The integration of battery electric or hybrid engines 31 in the aircraft 10 introduces several unique challenges and considerations for crash safety. While electric propulsion systems offer potential benefits such as reduced emissions and fuel consumption, ensuring the safety of passengers and crew during an accident remains a top priority. Here are some key factors to consider:

1. **Battery Safety:**

- Lithium-ion batteries are commonly used in electric aircraft 10. Ensuring the safety of battery packs 29 during a crash is crucial.
- Designing robust battery enclosures and implementing advanced thermal management systems to prevent thermal runaway and fires in the event of an impact is essential.

2. **Structural Design:**

- In addition, the structural design of the aircraft 10 considers the specific characteristics of the electric propulsion system 30.
- The proper integration of the electric components, such as the battery packs 29, into the airframe minimizes the risk of structural damage during a crash.

3. **Crashworthiness:**

- Aircraft need to be designed with crashworthiness in mind, meaning the structure should absorb and dissipate impact energy to protect occupants.
- Incorporating energy-absorbing materials and deformation zones to enhance crash survivability.

A preferred configuration of a fuselage tube section 22 is shown in **Fig. 2a** and **Fig. 2b,** reflecting the impact of the mentioned key factors battery safety, structural design and crashworthiness on the design of the fuselage tube section 22.

The aerostructure of the fuselage tube section 22 comprises several key components, including fuselage frames 221, stringers, and fuselage skin 223. These elements work together to provide structural integrity, shape, and aerodynamic properties to the fuselage tube section 22. The properties of these elements are as follows:

1. **Fuselage Frames:**

- Fuselage frames 221 are the rigid structural elements that form the skeleton or framework of the aircraft fuselage 20. They are typically spaced at regular intervals along the length of the fuselage and are therefore separated in longitudinal direction from each other. The frame pitch (longitudinal distance of frames) is $X_1$.
- Frames 221 provide shape and support to the fuselage tube section 22, helping it maintain its structural integrity and aerodynamic form. The frames 221 define the elliptical cross section of the fuselage tube section 22. $Y_1$ is the width of fuselage tube section.
- They are usually made of lightweight and strong materials such as aluminium alloy or composite materials.

2. **Fuselage Stringers:**

- Fuselage stringers are longitudinal structural members that run parallel to the fuselage's length and are attached to the frames 221.
- They help distribute loads and reinforce the fuselage structure.
- Stringers are often positioned between the frames and provide additional support to the skin 223.

3. **Fuselage Skin:**

- The fuselage skin 223 is the outermost layer of the fuselage, forming its surface.
- It covers and encloses the aerostructure, creating a streamlined shape for aerodynamic efficiency.
- The skin 223 also helps distribute aerodynamic loads and provides protection from external elements.
- The skin 223 is typically made of lightweight materials such as aluminium alloy, composite materials, or a combination of both.

The combination of frames 221, stringers, and skin 223 consolidates the fuselage aerostructure and creates a strong and lightweight structure that can withstand the forces encountered during flight. This design allows for an efficient and aerodynamic shape while maintaining the necessary strength and durability.

Furthermore, a cabin floor 224 is separating the upper compartment from the lower compartment and is supported by floor beams 225.

Functionally the cabin floor 224 in an aircraft 10 is an essential component of the cabin that provides a surface to hold the passenger seats 25 and for passengers to walk on. It serves as part of the overall structure of the fuselage tube section 22. The material used for the passenger floor is typically lightweight yet strong to meet safety and structural requirements. Common materials include advanced composite materials, aluminium alloys, or a combination of materials that balance strength and weight considerations.

The passenger floor is a part of the overall structural design of the fuselage, connecting to the frames 221 and stringers. It contributes to the overall integrity and strength of the aircraft structure. Hence the floor 224 must comply with aviation safety regulations to ensure it can withstand the various forces and loads experienced during flight, including turbulence and emergency situations.

The passenger floor 224 also accommodates various interior features such as carpeting, lighting, and seating attachments which are not shown. It furthermore house wiring, plumbing, and other systems necessary for in-flight services and amenities.

In summary, the passenger floor 224 is a critical part of an aircraft's cabin 12, providing a walking surface for passengers while contributing to the overall structural integrity of the aircraft. Its design must consider safety, weight, and functionality, and it plays a key role in creating a comfortable and secure environment for passengers.

In this respect, the cabin floor 224 is supported by plurality of floor beams 225 extending in transverse direction for supporting the floor, separated in longitudinal direction from each other. $Y_2$ is the width of a floor beam 225.

Floor beams 225 are horizontal structural elements that run across the width of the aircraft's fuselage tube section 22. These beams 225 are typically positioned perpendicular to the longitudinal axis of the aircraft 10. The floor beams 225 form part of the aerostructure, connecting to the fuselage frames 221 and supporting the passenger floor 224.

Floor beams 225 are attached or connected to the fuselage frames 221, which are the vertical structural elements that form the skeleton of the fuselage 20. The frames 221 and floor beams 225 work together to create a strong and rigid structure that supports the weight of the cabin, passengers, cargo, and any other loads.

Load Distribution:

The primary function of floor beams 225 is to distribute the various loads experienced during flight, such as the weight of passengers, battery packs 29, crew, luggage, and other cargo. By evenly distributing these loads, floor beams 225 help prevent localized stress points and contribute to the overall structural integrity of the aircraft 10.

In addition to connecting to frames 221, floor beams 225 may also integrate with stringers, which are longitudinal structural members running parallel to the aircraft's longitudinal axis. The integration of floor beams 225 with stringers helps create a robust and well-supported structure for the cabin floor 224.

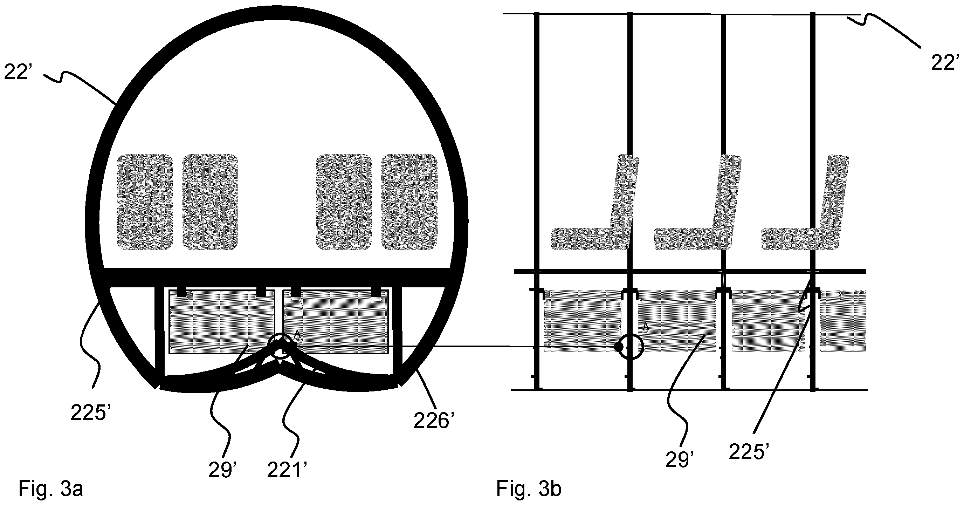

Key geometrical parameters of the fuselage tube section 22 are shown in **Fig. 2a** and **Fig. 2b** as follows, in general they also apply to the illustration of the deformed fuselage tube section 22' as shown on **Fig. 3a** and **Fig. 3b**:

X1    frame pitch (longitudinal distance of fuselage frames 221)
X2    longitudinal distance between battery packs 29

Y1    width of fuselage tube section 22
Y2    width of floor beams 225
Y3    lateral distance of uprights 226

Z1    fuselage height
Z2    lower fuselage height; vertical position of cabin floor 224
Z3    height of uprights 226
Z4    vertical extension of installed battery packs 29 below floor beam 225
Z5    vertical space of the battery compartment 28 between cargo and floor beam
Z6    maximum height of cargo floor 27

As an important feature of the fuselage tube section 22 is the location and installation of the battery packs 29. Therefore, a significant space, below the cabin floor 224 is allocated to the storage of the battery packs 29, i.e. within the lower compartment 26. The allocated storage space is reserved as battery compartments 28 which are limited and defined in vertical direction by the cabin floor 224 as upper limit and cargo floor 27 as lower limit. In lateral direction the space of the battery compartments is limited by the fuselage uprights 226 which are supporting the floor beams 225 and which are attached to the lower section of the fuselage frame 221. Hence loads from the floor beams 225 are supported by the fuselage frame 221. In longitudinal direction the battery compartments 28 are limited by the space between adjacent fuselage frames 221 or floor beams 225.

The battery packs 29 are attached to the floor beams 225 by mounts 291. Hence the battery packs 29 are suspended from the floor beam 225. The battery compartment 28 is not filled by the battery packs 29 (vertically). Only a range between 60 % and 90% is used for the battery packs 29. This ensures that sufficient space is left below the battery packs 29 to allow for a possible deformation of the fuselage 20 below the battery pack 29. For maintenance and replacement, the battery packs 29 can be unlocked and removed from the mounts 291. As shown in **Fig. 2a** and **Fig. 2b** each battery pack 29 is attached to a set of mounts 291 provided by a forward floor beam 225' and a backward floor beam 225". This will ensure that loads from the battery packs 29 are properly supported by floor beam 225 and transferred in the fuselage frame structure 221.

Typical dimensions and parameter ranges are as follows:
The vertical position of the cabin floor 224 in relation to the fuselage height $Z_2/Z_1$ is in a range of 0,2 to 0,5, where the lower value is typical for regional aircraft without cargo compartment and the upper value typical for a large wide-body aircraft.

The ratio of cargo compartment height to fuselage height $Z_5/Z_1$ is typically between 0 and 0,33.

The distance between the uprights 226 in relation to the width of the floor beam $Y_3/Y_2$ is typically between 0,6 and 0,8. In the deformed post-crash situation as illustrated in **Fig. 3a** and **Fig. 3b,** the vertical overlap between the battery pack 29 and the cargo floor structure is less than a certain percentage of the cargo floor structure height:

$Z_5 - Z_6 \geq Z_4 - \alpha Z_6$, with a proposed typical value $\alpha = 0{,}25$.

The height of the uprights supporting the passenger floor exceeds the height of the battery packs 29:

$Z_3 \geq (1 + \beta)Z_4$, with a proposed typical value $\beta = 0{,}2$.

The horizontal space between battery packs is related to both frame distance and cargo floor height;

$X_2 \geq \max(\gamma Z_6, \delta X_1)$, with proposed typical value of $\gamma = 0{,}25$ and $\delta = 0{,}8$.

The table below provides some exemplary values from prior art commercial and regional aircraft:

| Aircraft | 737 | E190 | A321 | ATR |
|---|---|---|---|---|
| max. outer width | 3.76 | 3.01 | 3.95 | 2.88 |
| outer height | 4.03 | 3.35 | 4.14 | 2.7 |
| z position of floor | 1.54 | 1.24 | 1.72 | 0.59 |
| outer width @ floor | 3.55 | 2.84 | 3.89 | 2.57 |
| floor width | 3.27 | 2.64 | 3.64 | 2.26 |
| dist. of uprights (at pax floor level) | NA | 1.66 | 2.66 | NA |
| height of uprights | NA | 0.45 | 0.83 | NA |
| cargo comp. height | 1 | 0.94 | 1.24 | 0 |
| cargo floor width | 1.63 | 0.75 | 1.56 | NA |
| cargo floor height | 0.32 | 0.17 | 0.22 | NA |
| | | | | |
| h_cargo/h | 0.248 | 0.281 | 0.300 | 0.000 |
| h_uprights/h_cargo | #VALUE! | 0.479 | 0.669 | #VALUE! |
| z_floor/h | 0.382 | 0.370 | 0.415 | 0.219 |
| d_upright/floor_width | #VALUE! | 0.629 | 0.731 | #VALUE! |

The longitudinal distance $X_2$ between the battery packs 29' allows that the deformed cargo floor structure can move partially between the battery packs 29' as shown in **Fig. 3a** and **Fig. 3b.** This feature reduces the vertical space requirement ($Z_5 - Z4$) for crash-safe battery installation.

In the event of a crash, the lower fuselage shell deforms plastically. A typical failure mode is shown starting from the intersection of the uprights 226' with the frame 221' inward, the lower deformed fuselage frames 221' bend inward. The deformation A of the structure dissipates a significant amount (up to 50%) of the impact energy. In a later stage, not shown in the drawings, the uprights 226' dissipate further energy by crushing.

The deformation A of the lower fuselage, in combination with energy dissipation due to plastic deformation, results in accelerations at the cabin level (where the passengers sit) that are considered survivable for passengers.

**List of References**

| 10 | Aircraft |
|---|---|
| 11 | Empennage |
| 12 | Cabin |
| 13 | Cockpit |
| 14 | T-tail |
| 15 | Wing |
| 20 | Fuselage |
| 21 | T-type empennage |
| 22, 22' | Fuselage tube section |
| 221, 221' | Fuselage frame |
| 223 | Fuselage skin |
| 224 | Cabin floor |
| 225, 225', 225" | Floor beams |
| 226, 226' | Fuselage uprights |

| 23 24 | Passenger / upper compartment |
|---|---|
| 25 | Passenger seats |
| 26 | Lower compartment |
| 27 | Cargo floor |
| 28 | Battery compartments |
| 29 | Battery pack |
| 291 | Mount |

| 30 | Electric propulsion system |
|---|---|
| 31 | Engine |
| 32 | Nacelles |
| 33 | Propeller |

| A | Deformation |
|---|---|
| X | Longitudinal axis |
| Z | Vertical axis |

**Claims**

1. Fuselage for a transport aircraft (10) with an electric propulsion system (30) and a fuselage tube section (22, 22') for hosting payload and battery packs (29) comprising

   • a **cabin floor** (224) separating an upper compartment (24) from a lower compartment (26),
   • a plurality of **floor beams** (225, 225', 225") extending in transverse direction for supporting the cabin floor (224), separated in longitudinal direction from each other,
   • **fuselage frames** (22) supporting the cabin floor (224) and / or the floor beams (225, 225', 225") and / or the fuselage skin separated in longitudinal direction from each other,
   **characterised in that**,
   • the lower compartment (26) is comprising a plurality of **battery compartments** (28) separated in longitudinal direction from each other, each configured to host at least one battery pack (29), wherein the battery packs (29) are suspended from the floor beam (225, 225', 225") and / or cabin floor (224).

2. Fuselage according to claim 1, **characterised in that** the fuselage tube section (22, 22') comprises a cargo floor (27) which extends parallel and below to the cabin floor (224) and defines in-between with the cabin floor (224) the battery compartments (28).

3. Fuselage according to claim 2, **characterised in that** the vertical extension $Z_4$ of the battery packs (29) is smaller than the height $Z_5$ between the cargo floor (27) and the cabin floor (224) defining a compression space.

4. Fuselage according to one of the proceeding claims, **characterised in that** battery packs (29) arranged on both sides of the vertical axis (Z) of the fuselage tube section (22, 22') with a distance in-between the battery packs, defining a transversal space.

5. Fuselage according to claim 4, **characterised in that** the bottom tube section of the fuselage tube section (22, 22') and / or the cargo floor (27) are defined to protrude in a case of collapse at a pre-defined vertical g-load at least partially into the transversal space.

6. Fuselage according to one of the proceeding claims, **characterised in that** the battery packs (29) comprising mounts (291) which are attached to the floor beams ( 225, 225', 225") next to the battery packs (29).

7. Fuselage according to one of the proceeding claims, **characterised in that** the battery packs (29) are releasably attached to the floor beams (225, 225', 225") and / or cabin floor (224) for service exchange.

8. Fuselage according to one of the proceeding claims, **characterised in that** uprights (226) are provided on both transversal sides of the battery compartments (28) which are attached to the floor beam (225, 225', 225") on one side and to the fuselage frames (221) on the other side.

9. Fuselage according to one of the proceeding claims, **characterised in that** uprights (226) are provided between the cargo floor (27) and the fuselage frames (221) wherein the uprights (226) are attached to the floor beam (225, 225', 225") on one side and to the fuselage frames (221) on the other side.

10. Fuselage according to claim 9, **characterised in that** the uprights (226) are provided with a braking point which are defined to collapse at a pre-defined vertical g-load.

11. Fuselage according to claim 9 or 10, **characterised in that** the height $Z_3$ of the uprights (226) supporting the cabin floor (224) exceeds the height of the battery packs (29) and is defined by the formula:

$$Z_3 \geq (1 + \beta) * Z_4,$$

whereby $\beta = 0{,}2$.

12. Fuselage according to one of the proceeding claims, **characterised in that** the fuselage tube section (22, 22') has a predominately circular or elliptic cross section.

13. Fuselage according to one of the proceeding claims, **characterised in that** the ratio $Z_2/Z_1$ between the vertical position of the cabin floor (224) and the fuselage height $Z_1$ is in a range of 0.2 to 0.5.

14. Fuselage according to one of the proceeding claims, **characterised in that** the ratio $Z_5/Z_1$ between the battery compartment height $Z_5$ and the fuselage height $Z_1$ is $\leq 0{,}33$.

15. Fuselage according to one of the proceeding claims, **characterised in that** the longitudinal space between battery packs (29) is defined by the formula

$$X_2 \geq \max(\gamma Z_6, \delta X_1),$$

with $\gamma = 0{,}25$ and $\delta = 0{,}8$.

16. Fuselage according to one of the proceeding claims, **characterised in that** the fuselage (20) comprises a fuselage tube section (22, 22') for hosting passengers and cargo.

17. Aircraft **characterised in that** the aircraft (10) comprises a fuselage (20) according to one of the proceeding claims.

**Fig. 1a**

11, 14
15 33 20 30, 31
Z 13
10

**Fig. 1b**

20, 22
2a
24
11, 14
Cabin  Battery Modules
13
10
29
2a

**Fig. 1c**

20, 22
24
11, 14
Cabin  Battery Modules
13
10
29
2b  2b
X

Fig. 2b

Fig. 2a

Fig. 3b

Fig. 3a

## EUROPEAN SEARCH REPORT

**Application Number**

EP 24 02 0068

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/291281 A1 (BURGUNDER SAMUEL [FR] ET AL) 15 October 2015 (2015-10-15) | 1-4,6,7, 12,13, 15-17 | INV. B64C1/06 B64C1/18 B64D27/24 |
| Y | * figures 3-6, 6 * | 5 | |
| A | | 8-11,14 | |
| | ----- | | |
| X | DE 101 45 276 B4 (DEUTSCH ZENTR LUFT & RAUMFAHRT [DE]) 10 April 2008 (2008-04-10) | 1,7,12, 13,15-17 | |
| A | * figures 1, 2, 14 * | 2-6, 8-11,14 | |
| | ----- | | |
| X | US 11 685 502 B2 (BELL TEXTRON INC [US]; TEXTRON INNOVATIONS INC [US]) 27 June 2023 (2023-06-27) | 1,4, 7-10, 14-17 | |
| A | * figure 2 * | 2,3,5,6, 11-13 | |
| | ----- | | |
| X | EP 4 310 000 A1 (AIRBUS HELICOPTERS DEUTSCHLAND GMBH [DE]) 24 January 2024 (2024-01-24) | 1,4,7, 14-17 | |
| A | * figures 6-8, 10 * | 2,3,5,6, 8-13 | TECHNICAL FIELDS SEARCHED (IPC) |
| | ----- | | B64C |
| Y | DE 10 2009 020891 B4 (DEUTSCHES ZENTRUM FUER LUFT & RAUMFAHRT EV [DE]) 5 February 2015 (2015-02-05) | 5 | B64D |
| A | * figures 12-15 * | 1-4,6-17 | |
| | ----- | | |
| A | US 11 807 371 B2 (HAMILTON SUNDSTRAND CORP [US]) 7 November 2023 (2023-11-07) * the whole document * | 1-17 | |
| | ----- | | |
| A | US 11 377 230 B2 (AIRBUS OPERATIONS SAS [FR]) 5 July 2022 (2022-07-05) * the whole document * | 1-17 | |
| | ----- | | |

The present search report has been drawn up for all claims

| Place of search | Date of completion of the search | Examiner |
|---|---|---|
| Munich | 20 August 2024 | Duval, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 02 0068

20-08-2024

| Patent document cited in search report | | Publication date | Patent family member(s) | | Publication date |
|---|---|---|---|---|---|
| US 2015291281 | A1 | 15-10-2015 | CN | 103079953 A | 01-05-2013 |
| | | | EP | 2598398 A1 | 05-06-2013 |
| | | | FR | 2963314 A1 | 03-02-2012 |
| | | | US | 2013228655 A1 | 05-09-2013 |
| | | | US | 2015291281 A1 | 15-10-2015 |
| | | | WO | 2012022891 A1 | 23-02-2012 |
| DE 10145276 | B4 | 10-04-2008 | NONE | | |
| US 11685502 | B2 | 27-06-2023 | EP | 3932796 A1 | 05-01-2022 |
| | | | US | 2021403136 A1 | 30-12-2021 |
| EP 4310000 | A1 | 24-01-2024 | CA | 3194542 A1 | 30-05-2023 |
| | | | CN | 117429612 A | 23-01-2024 |
| | | | EP | 4310000 A1 | 24-01-2024 |
| | | | US | 2024092188 A1 | 21-03-2024 |
| DE 102009020891 | B4 | 05-02-2015 | NONE | | |
| US 11807371 | B2 | 07-11-2023 | EP | 3750793 A1 | 16-12-2020 |
| | | | US | 2021031934 A1 | 04-02-2021 |
| US 11377230 | B2 | 05-07-2022 | CN | 110615112 A | 27-12-2019 |
| | | | EP | 3584164 A1 | 25-12-2019 |
| | | | FR | 3082824 A1 | 27-12-2019 |
| | | | US | 2019389596 A1 | 26-12-2019 |

For more details about this annex : see Official Journal of the European Patent Office, No. 12/82

**EP 4 613 635 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3421760 A1
- WO 2009153471 A2
- WO 2022002319 A
- WO 2012045028 A1
- US 20130192246 A1